# EUROPEAN PATENT APPLICATION

(11) **EP 2 113 832 A1**
(43) Date of publication of application: **04.11.2009**
(21) Application number: 08251548.7
(22) Date of filing: 28.04.2008
(51) Int. Cl.: G06F 3/06, G06F 13/38

(54) **Medium for integrating storing capacities of multiple storage devices**

(71) Applicant: Stone Technology International Co., Ltd., Taipei (TW)
(72) Inventor: Yao, Li-Ho, Taipei (TW)
(74) Representative: Hedley, Nicholas James Matthew

(57) **Abstract**

A medium for integrating storing capacities of multiple storage devices has multiple memory card connectors (30), a memory card interface management module (20), a control module (10) and a communication interface (40). The memory card interface management module (20) is connected to the memory card connectors (30). The control module (10) is connected to the memory card interface management module (20) and stores a mount and unmount management process. When the control module (10) executes the mount and unmount management process to integrate storing capacities of all connected memory cards into a single storing capacity and unintegrate the storing capacity of the impendingly removed memory cards from the storing capacity of all connected memory cards. Therefore, it is convenient for users to change the storing capacity of the medium based on different requirements.

## Description

### 1. Field of the Invention

The present invention relates to a medium, and more particularly to a medium that integrates storing capacities of multiple storage devices as a single storing capacity.

### 2. Description of Related Art

Digital electronic products are popularly used, such as digital storage devices. However, there are many types of storage devices to connect to the digital electronic products. For example, hard drives and removable hard drives are often used as storage devices of desktops. Memory cards and removable hard drives are often used as storage devices of laptops since the laptops have all-in-one memory card readers. Memory cards are also often used as storage devices of consumer electronic products, such as cellphones, digital cameras, digital video cameras without hard drives or digital media players (MP3, MP4 or etc.). Furthermore, different brands or different versions of memory card often have different sizes and different storing capacities. Therefore, when a user owns a desktop, a laptop and a consumer electronic product, the user may require more than one type of storage devices to expand the storing capacity of the desktop, the laptop and the consumer electronic product. It is inconvenient for the user to manage and use the different types of storage devices. Also, the physical limitation of the small memory cards often result in wasted spaces which, when properly combined, can be made useful to the user.

Therefore, the present invention provides a medium that integrates storing capacities of multiple storage devices to mitigate or obviate the aforementioned problems.

The main objective of the invention is to provide a medium for integrating storing capacities of multiple storage devices as a single storing capacity.

The medium in accordance with the present invention comprises A medium for integrating storing capacities of multiple storage devices has multiple memory card connectors, a memory card interface management module, a control module and a communication interface. Each memory card connector is used to connect to a memory card. The memory card interface management module is connected to the memory card connectors. The control module is connected to the memory card interface management module and stores a mount and unmount management process. The control module executes the mount and unmount management process to integrate storing capacities of all connected memory cards into a single storing capacity and unintegrate the storing capacity of the impendingly removed memory cards from the storing capacity of all connected memory cards. The communication interface is used to connect to a computer. Therefore, it is convenient for users to change the storing capacity of the medium based on different requirements.

Other objectives, advantages and novel features of the invention will become more apparent from the following detailed description when taken in conjunction with the accompanying drawings.

### IN THE DRAWINGS:

Fig. 1 is a functional block diagram of a first embodiment of a medium in accordance with the present invention;
Fig. 2 is a functional block diagram of a second embodiment of a medium in accordance with the present invention; and
Fig. 3 is a functional block diagram of a third embodiment of a medium in accordance with the present invention.

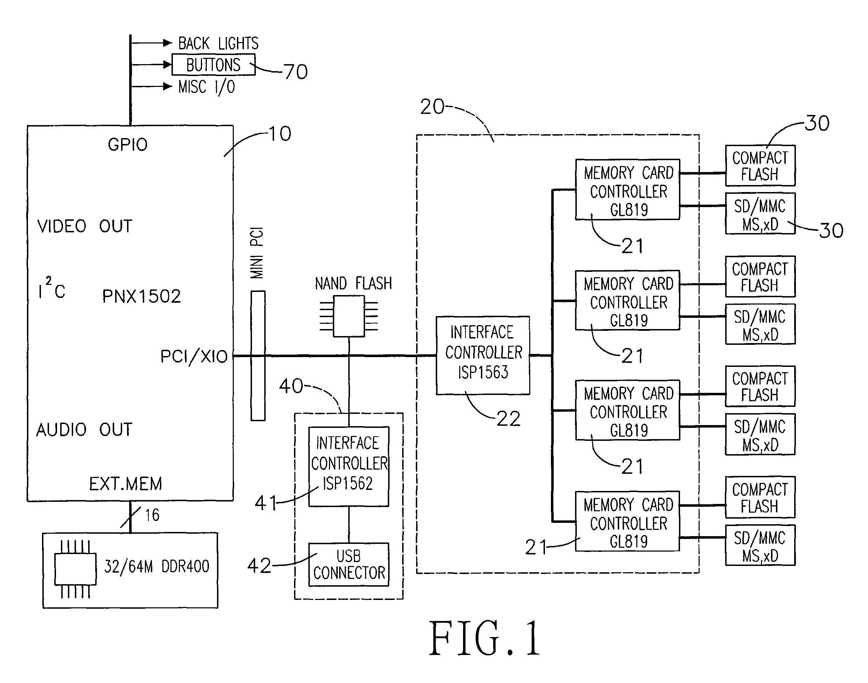

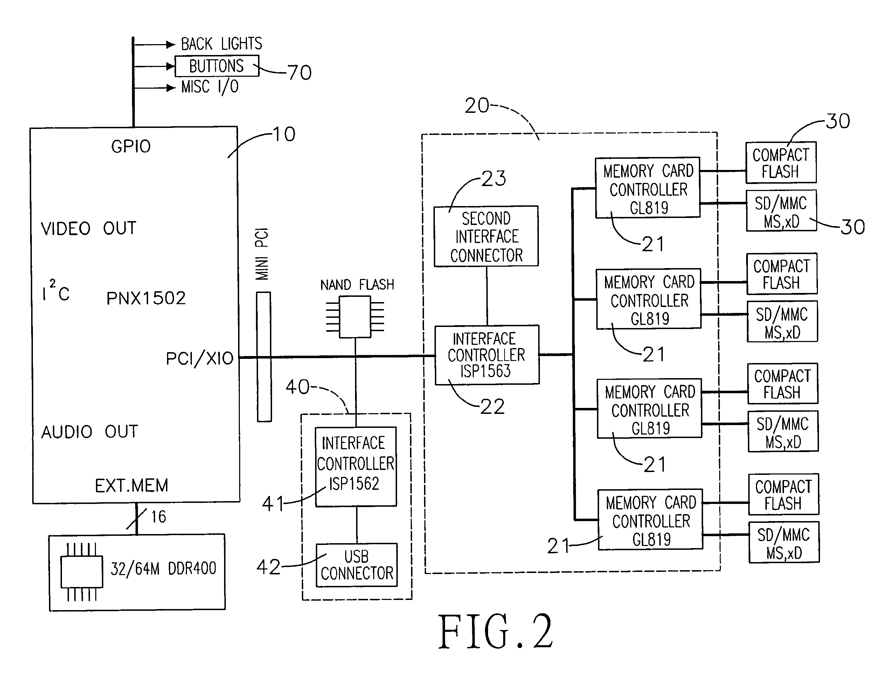

With reference to Figs. 1 and 2, a medium in accordance with the present invention comprises multiple memory card connectors (30), a memory card interface management module (20), a control module (10) and a communication interface (40).

Each memory card connector (30) may be a unitary communicating standard memory card connector or an all-in-one communicating standard memory card connector. The unitary communicating standard memory card connector only allows identical communicating standard memory cards to be plugged in the said memory card connector. The all-in-one communicating standard memory card connector allows all known communicating standard memory cards to be plugged in the said memory card connector. The memory card may be a CompactFlash (CF) memory card, a Secure Digital (SD) memory card, a Multimedia card (MMC), a Memory Stick (MS) memory card, an Extreme Digital (xD) Picture card or the like.

The memory card interface management module (20) is connected to the memory card connectors (30) to control the connected memory card and may further comprise multiple memory card controllers (21), an interface controller (22) and at least one optional second interface connector (23).

The memory card controllers (21) are connected respectively to the memory card connectors (30).

The interface controller (22) is connected to the memory card controllers (21).

Each second interface connector (23) is connected to the interface controller (22), is used to connect to a memory device, such as a flash memory, and may be a Universal Serial Bus (USB) connector.

The control module (10) has controlling, computing and data transforming capabilities, is connected to the memory card interface management module (20) through a Peripheral Component Interconnect (PCI) interface to scan the memory card connectors (30) through the memory card interface management module (20), stores a mount and unmount management process, may be connected to the memory card controllers (21) and the second interface connector (23) through the interface controller (22) in the memory card interface management module (20) to scan the memory card connectors (30) and the second interface connector (23) and may be an integrated circuit (IC) numbered PNX1502.

When the control module (10) detects either the memory card connectors (30) connected to at least one newly-added memory card or the second interface connector (23) connected to at least one newly-added memory device, the control module (10) will executes the mount and unmount management process to integrate storing capacities of all connected memory cards and the memory device into a single storing capacity. When one of the connected memory cards is intended to be removed, the control module (10) will executes the mount and unmount management process to move data stored in the impendingly removed memory card to other connected memory cards and memory devices and unmount the impendingly removed memory card from the medium.

Furthermore, the mount and unmount management process may be performed by a logical volume management (LVM) method to manage logical volumes. A logical volume is an abstraction of a disk partition of a disk drive. The LVM method is a disk partition method that provides higher level and efficiency solutions to manage storing capacities of disk drives than conventional disk partition method. The LVM method can combine storing capacity of a newly-added disk drive with the storing capacities of the existing disk drives even the existing disk drives are operating because the LVM method ensures data against corruption when integrating the storing capacities of all together connected disk drives.

The communication interface (40) is used to connect to a computer, is connected to the control module (10) and may further comprise an interface controller (41) and an interface connector (42). The interface controller (41) is connected to the control module (10) through the PCI interface. The interface connector (42) is connected to the interface controller (41) and may be a USB connector.

Based on the foregoing descriptions, when the medium of the present invention is connected to a computer through the communication interface (40), the computer will detect medium of the present invention not as multiple memory cards and memory devices connected to the computer but as a single storage medium connected to the computer.

For example, assuming the described medium integrates the storing capacities of all connected memory cards and memory device in one and creates a named \Barebone volume having 4 gigabytes storing capacity. When a memory card having 1 gigabytes storing capacity is newly connected to the medium of the present invention, the control module (10) integrates the 1 gigabytes storing capacity of the newly added memory card into the storing capacity of the \Barebone volume so the storing capacity of the \Barebone volume becomes 5 gigabytes. Furthermore, before removing one of the connected memory cards from the medium, an unmount request should be generated mechanically or electronically and sent to the control module (10). After receiving and acknowledging the unmount request, the control module (10) will execute the LVM method to move data stored in the impendingly removed memory card to other connected memory cards and memory devices. After that the control module (10) allows to unmount the impendingly removed memory card from the medium. Therefore, the present invention integrates the storing capacities of multiple memory cards and memory device even the memory cards and memory device have different storing capacities. Accordingly, it is convenient for users to change the storing capacity of the medium based on different requirements.

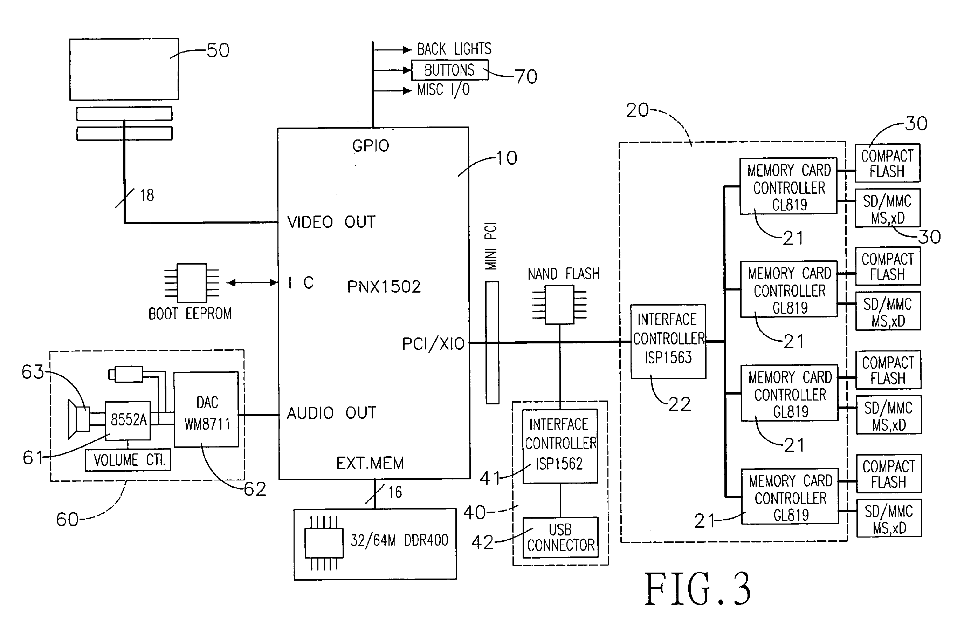

With reference to Fig. 3, the present invention may further comprise an optional display module (50), an optional audio module (60) and an operation module (70) to play audio and video data, and the control module (10) may further have a video output terminal sending digital video data and an audio output terminal sending digital audio data.

The display module (50) is connected to the video output terminal of the control module (10) to display videos and may be a liquid crystal display (LCD).

The audio module (60) is connected to the audio output terminal of the control module (10) to play sounds and may comprise a digital to analog converter (DAC) (62), an amplifying circuit (61) and a speaker (63).

The DAC (62) is connected to the audio output terminal of the control module (10) to transform the digital audio data into analog audio signals.

The amplifying circuit (61) has an input terminal and an output terminal. The input terminal of the amplifying circuit (61) is connected to the DAC (62) so the amplifying circuit (61) amplifies the analog audio signals.

The speaker (63) is connected to the output terminal of the amplifying circuit (61) to play sounds.

The operation module (70) is connected to the control module (10), is used to allow users to control the present invention and may be multiple buttons or a touch panel.

Based on the foregoing descriptions, the medium in accordance with the present invention either performs as a removable storage medium or a multimedia player, such as a MP3 or MP4 player, having resizable storing capacity.

Even though numerous characteristics and advantages of the present invention have been set forth in the foregoing description, together with details of the structure and function of the invention, the disclosure is illustrative only. Changes may be made in detail, especially in matters of arrangement of parts within the principles of the invention to the full extent indicated by the broad general meaning of the terms in which the appended claims are expressed.

## Claims

1. A medium for integrating storage devices comprising:
multiple memory card connectors (30), and each memory card connector (30) used to allow a memory card to plug in the memory card connector (30) and adapted to connect to the plugged memory card;
a memory card interface management module (20) connected to the memory card connectors (30) to control the connected memory card; and
a communication interface (40) used to connect to a computer; and
the medium being **characterized in that:**
a control module (10) is connected to the memory card interface management module (20) and the communication interface (40) and stores a mount and unmount management process, wherein the control module (10) executes the mount and unmount management process to integrate storing capacities of all connected memory cards into a single storing capacity and unintegrate the storing capacity of the impendingly removed memory cards from the storing capacity of all connected memory cards.

2. The medium as claimed in claim 1, wherein the memory card interface management module (20) further comprises:
multiple memory card controllers (21) connected respectively to the memory card connectors (30); and
an interface controller (22) connected to the memory card controllers (21).

3. The medium as claimed in claim 2, wherein the memory card interface management module (20) further comprises at least one second interface connector (23), and each second interface connector (23) is connected to the interface controller (22) and is adapted to connect to an external memory device.

4. The medium as claimed in claim 3, wherein the mount and unmount management process comprises steps of:
determining if either at least one new-added memory card is connected to the memory card connectors (30) or at least one new-added memory device is connected to the second interface connector (23);
integrating storing capacities of all connected memory cards and the memory device into a single storing capacity when either at least one new-added memory card is connected to the memory card connectors (30) or at least one new-added memory device is connected to the second interface connector (23);
determining if either one of the memory cards or the memory device is going to be removed; and
moving data stored in either the impendingly removed memory card or the impendingly removed memory device to other connected memory cards and memory device when either one of the memory cards or the memory device is going to be removed.

5. The medium as claimed in claim 4, wherein the control module (10) further scans the memory card connectors (30) and the second interface connector (23) before the control module (10) executes mount and unmount management process.

6. The medium as claimed in claim 5, wherein the second interface connector (23) is a Universal Serial Bus connector.

7. The medium as claimed in claims 1, 2, 3, 4, 5 or 6, wherein the communication interface (40) further comprises:
an interface controller (41) connected to the control module (10) through a Peripheral Component Interconnect interface; and
an interface connector (42) connected to the interface controller (41).

8. The medium as claimed in claim 7, wherein the interface connector (42) is a Universal Serial Bus connector.

9. The medium as claimed in claims 1, 2, 3, 4, 5 or 6 further comprising a display module (50), an audio module (60) and an operation module (70), wherein:
the control module (10) further has
a video output terminal sending digital video data; and
an audio output terminal sending digital audio data;
the display module (50) is connected to the video output terminal of the control module (10) to display videos;
the audio module (60) is connected to the audio output terminal of the control module (10) to play sounds; and
the operation module (70) is connected to the control module (10) and is for controlling the medium.

10. The medium as claimed in claim 9, wherein the display module (50) is a liquid crystal display.

11. The medium as claimed in claim 9, wherein the audio module (60) further comprises:
a digital to analog converter (62) connected to the audio output terminal of the control module (10) to transform the digital audio data into analog audio signals;
an amplifying circuit (61) having
an input terminal connected to the digital to analog converter (62) so the amplifying circuit (61) amplifying the analog audio signals; and
an output terminal; and
a speaker (63) connected to the output terminal of the amplifying circuit (61) to play sounds.

12. The medium as claimed in claim 9, wherein the operation module (70) comprises multiple buttons.

13. The medium as claimed in claims 1, 2, 3, 4, 5 or 6, wherein the mount and unmount management process is performed as a logical volume management method.

14. The medium as claimed in claim 13, wherein the memory card interface management module (20) is connected to the memory card connectors (30) through a Peripheral Component Interconnect interface.
